# DEMANDE DE BREVET EUROPEEN

(11) **EP 2 716 168 A1**
(43) Date de publication de la demande: **09.04.2014**
(21) Numéro de dépôt: 13187271.5
(22) Date de dépôt: 03.10.2013
(51) Int. Cl.: A23L 1/32, A23B 5/005, A23B 5/06, B65D 85/32

(54) **Produit à base d'oeuf sans coquille et pasteurisé, et procédé de fabrication correspondant**

(30) Priorité: 04.10.2012 FR 1259451
(71) Demandeur: Ovoteam, 56500 Naizin (FR)
(72) Inventeur: Detre, Catherine, 22400 LAMBALLE (FR); Bianeis, Marine, 35800 DINARD (FR); Galet, Olivier, 22950 TREGUEUX (FR); Sarrazin, Laurent, 53440 LA BAZOGE MONTPINCON (FR)
(74) Mandataire: Windal-Vercasson, Gaelle I.M.

(57) **Abrégé**

La présente invention a pour objet un produit imitant un oeuf à la coque, comprenant un réceptacle rigide, fermé par un opercule et contenant au moins une partie d'un oeuf, pasteurisé et cuit dans le réceptacle, et sans coquille, ainsi qu'un procédé de fabrication correspondant.

## Description

### 1. Le domaine de l'invention

Le domaine de l'invention est celui des ovoproduits, ou produits transformés à base d'oeufs, destinés notamment, mais non exclusivement, au grand public, et distribués par exemple par les grandes et moyennes surfaces, ou encore à des utilisations en nombre, par exemple dans des hôpitaux, des maisons de retraite ou des cantines.

### 2. L'art antérieur et ses inconvénients

A ce jour, les oeufs sont principalement vendus au consommateur final sous forme d'oeufs coquilles, qu'il est libre de transformer, à son domicile, pour en faire par exemple des omelettes, des oeufs à la coque, des oeufs à la neige, etc.

L'industrie alimentaire propose par ailleurs, notamment aux industriels et aux professionnels de la restauration, un certain nombre de produits à base d'oeufs, par exemple du blanc d'oeuf liquide ou du jaune d'oeuf liquide, des oeufs durs, des oeufs pochés...Ces produits sont, du fait de leur mode de conservation ou de conditionnement notamment, spécifiquement destinés à des professionnels.

Le grand public souhaite, au moins dans certains cas, disposer de produits prêts à l'emploi, ne nécessitant pas de préparation particulière ni d'équipement spécifique, et dont le temps de préparation est très réduit et dont le résultat est garanti.

Ainsi, par exemple, une personne souhaitant déjeuner sur son lieu de travail apprécie de pouvoir réchauffer, en particulier à l'aide d'un four à micro-ondes, un plat prêt à l'emploi. S'il existe de nombreux plats préparés à base de légumes, de viande ou de poisson, il en existe en revanche peu à base d'oeufs. En particulier, un utilisateur peut difficilement consommer sur son lieu de travail par exemple un plat aussi simple qu'un oeuf à la coque.

En effet, non seulement les oeufs coquilles sont fragiles, et donc difficiles à transporter, mais ils nécessitent de plus de disposer d'une plaque de cuisson, et d'une casserole, pour assurer leur cuisson. En outre, cette cuisson suppose un contrôle précis du temps de cuisson, qui dépend notamment de la température initiale de l'oeuf, de sa forme et de son calibre.

Il n'est de plus pas possible pour le consommateur d'ajuster la texture du jaune, selon ses préférences, de liquide à mollet avec la cuisson à l'eau chaude accessible en cuisine.

En outre, la cuisson à l'eau bouillante couramment pratiquée n'assure pas un couple temps/température suffisant pour l'élimination de la salmonelle dans le jaune. En particulier, ce traitement thermique ne permet pas d'éliminer les salmonelles provenant de la contamination des follicules ovariens de la poule pondeuse aussi appelée contamination verticale.

De plus, lors de la cuisson à l'eau chaude, la coquille de l'oeuf peut se rompre.

Enfin, la consommation d'un oeuf à la coque nécessite son ouverture, et donc le cassage de la coquille, opération qui n'est pas toujours aisée, et qui peut entraîner la chute de morceaux de coquille, le cas échéant à tout le moins peu visibles, qui peuvent cependant s'avérer très dangereuses pour le consommateur. Il existe également un risque de brûlure, le produit étant très chaud en fin de cuisson.

Pour ces raisons (risques bactériologiques, d'ingestion de coquille et/ou de brûlure), des parents peuvent être incités à ne pas donner d'oeufs à la coque à de jeunes enfants. De la même façon, les oeufs à la coque ne sont pas utilisés dans les hôpitaux ou les maisons de retraite, alors que l'oeuf à la coque est un aliment simple, bien accepté et nutritionnellement intéressant pour ce type de population.

### 3. Objectifs de l'invention

II existe donc un besoin d'une technique permettant de fournir des oeufs à la coque ne présentant pas ces inconvénients, ou au moins certains d'entre eux.

Plus précisément, un objectif de l'invention est de fournir un moyen de consommation simple et efficace d'un oeuf à la coque, ou similaire.

Un autre objectif de l'invention, selon au moins un mode de réalisation, est de fournir un tel moyen, permettant de préparer et de déguster un oeuf à la coque très rapidement, sans ustensile de cuisine particulier (autre que des moyens classiques pour réchauffer le produit, par un exemple un four à micro-ondes) et en conservant les qualités organoleptiques de l'oeuf.

Encore un autre objectif de l'invention, selon au moins un mode de réalisation, est de fournir un tel moyen, qui soit adapté au grand public, et puisse donc se conserver sur une longue durée, par exemple de l'ordre de 30 jours, voire plus, à température adaptée.

Selon un autre aspect de l'invention, celle-ci a encore pour objectif de fournir un procédé de fabrication d'un tel moyen.

Ainsi, selon au moins un mode de réalisation de l'invention, un objectif de l'invention est de fournir un tel procédé, permettant de proposer une gamme de textures du jaune, allant du liquide au pâteux (à l'instar des viandes, de « bleu » à « bien cuit ») et/ou différents types de produits.

### 4. Présentation de l'invention

Ces objectifs ainsi que d'autres qui apparaîtront plus clairement par la suite, sont atteints selon l'invention à l'aide d'un produit imitant un oeuf à la coque, comprenant un réceptacle rigide fermé par un opercule et contenant au moins une partie d'un oeuf, pasteurisé et cuit dans ledit réceptacle, et sans coquille. Selon un aspect particulier de l'invention, à l'ouverture dudit opercule, le jaune de l'oeuf est visible.

Par « produit », on entend dans la présente description un ensemble destiné à être consommé, comprenant un contenant, ou récipient, définissant le réceptacle, et un contenu, comestible, à base d'oeuf. Le contenant peut par exemple prendre la forme d'un coquetier, de façon à fournir un produit similaire à un oeuf coquille, mais sans coquille. Le réceptacle remplace la coquille, et il est ainsi possible de consommer simplement un oeuf coquille, sans risque, et sans difficulté de cuisson.

Par « cuit », on entend, dans la présente description, le fait que l'oeuf, ou la partie d'oeuf, est déjà cuit (grâce à la pasteurisation dans l'emballage), et peut être réchauffé, par exemple à l'aide d'un four à micro-ondes (ainsi, le produit peut être consommé chaud ou tiède. Il est également possible de le consommer froid, sans réchauffage).

Cette cuisson est adaptée de façon à pasteuriser l'oeuf, sans nuire à l'aspect et à la qualité organoleptique de celui-ci, et indépendamment de son mode de consommation (le cas échéant sans réchauffage). Ainsi, selon un mode de réalisation particulier, on peut garantir une durée de conservation d'au moins 30 jours, à une température entre 0 et 4° C.

L'oeuf peut être entier, et dans ce cas la texture du jaune peut être liquide, visqueuse ou pâteuse, selon les préparations. Dans d'autres modes de réalisation, on peut ne prévoir que du jaune, que du blanc, ou une préparation particulière, telle qu'un oeuf cocotte avec de la crème...

L'oeuf peut notamment être un oeuf de poule, mais plus généralement un oeuf de tout autre oiseau produisant des oeufs consommables (cane, caille, ...). Dans ce cas, bien sûr, les conditions préférentielles (températures et durées de traitement en particulier) décrites par la suite, et qui concernent plus spécifiquement les oeufs de poule, devront être adaptées.

Lorsqu'un tel produit imitant un oeuf à la coque comprend du blanc et du jaune d'oeuf, il rappelle fidèlement un oeuf à la coque « traditionnel », dont on a ôté le haut de la coquille, dans la mesure où le jaune de l'oeuf est directement visible par le consommateur à l'ouverture de l'opercule, i.e. sans être masqué par une couche de blanc d'oeuf partiellement ou totalement coagulée. Ceci est particulièrement important pour le consommateur final, qui retrouve ainsi les propriétés du produit auquel il est habitué.

Selon au moins un mode de réalisation particulier, la surface intérieure dudit réceptacle définit sensiblement un ovoïde, ou encore un hémisphère ou une portion de sphère.

Ceci permet d'obtenir une distribution homogène du blanc d'oeuf, comme dans le cas dans d'un oeuf coquille, avec la même épaisseur, et donc une cuisson précise et contrôlée du blanc et du jaune.

La forme ovoïde permet avantageusement de se rapprocher de celle d'un oeuf à la coque décalottée.

Selon au moins un mode de réalisation particulier, ledit opercule est un film plastique solidarisé audit réceptacle par soudage. Cet opercule est préférentiellement pelable.

Ce film peut notamment être un film plastique ou en tout autre matériau compatible avec le processus de fabrication.

L'invention concerne également un procédé de fabrication d'un tel produit. Un tel procédé de fabrication comprend notamment une étape de cuisson et pasteurisation du contenu dudit réceptacle comprenant les étapes suivantes :
- montée en température, pour atteindre une température comprise entre 90et 115 °C, en moins de 10 minutes ;
- maintien à une température comprise entre 90 et 115° C pendant une durée inférieure ou égale à 10 minutes.

L'invention propose donc une approche nouvelle et non évidente de fabrication d'un produit à base d'oeufs, permettant de fournir des oeufs prêts à consommer, après réchauffage, par exemple sous la forme d'un oeuf à la coque, dans son coquetier, sans aucun des inconvénients détaillés précédemment.

En effet, une telle approche permet d'obtenir de façon efficace et sûre des oeufs à la coque pasteurisés. Notamment, l'étape de maintien permet de faire coaguler le blanc sans coaguler le jaune. En particulier, pour obtenir une parfaite gélification du blanc en tout point, il faut l'amener a minima à 85°C, idéalement à 90°C.

On précise que toutes les températures mentionnées sont des températures d'eau ou de vapeur, sauf s'il est précisé qu'il s'agit de l'oeuf.

Selon au moins un mode de réalisation de l'invention, lors de ladite étape de cuisson et pasteurisation du contenu dudit réceptacle, on maintient un espace de tête de hauteur non nulle et inférieure ou égale à environ 10 mm entre une surface supérieure dudit contenu et ledit opercule.

En d'autres termes, lors de la fermeture du réceptacle par l'opercule, on maintient une fine lame d'air entre la surface supérieure de l'oeuf et l'opercule. Cet espace de tête, que l'on choisit de préférence d'une hauteur inférieure au centimètre, entraîne avantageusement une cuisson insuffisante du dessus de l'oeuf. Ainsi, il est possible de trouver des paramètres de cuisson permettant de voir le jaune d'oeuf à travers le gel de blanc d'oeuf peu cuit et translucide ou de préférer le décollement de ce gel de blanc d'oeuf lors des manipulations, laissant apparaître le jaune. Ainsi, lorsque le client final ouvre l'opercule obturant le réceptacle, au moment de sa consommation, le jaune de l'oeuf est directement visible pour le consommateur. Le produit rappelle donc parfaitement l'oeuf à la coque « traditionnel », dans lequel le jaune est directement visible et accessible lorsque le consommateur brise et ôte le haut de la coquille.

Selon au moins un mode de réalisation particulier, ladite étape de cuisson et de pasteurisation du contenu dudit réceptacle comprend également des étapes de :
- baisse progressive de la température jusqu'à une température de 90 à 50° C;
- pré-refroidissement rapide, de façon à amener la température du jaune d'oeuf en tout point de l'oeuf à moins de 15° C.

Une telle étape de baisse progressive à une température comprise entre 85°C et 50°C assure la pasteurisation du jaune. Elle permetpar exemple l'obtention d'une valeur pasteurisatrice sur la salmonelle du jaune d'au moins 10 (par exemple : 1 minute à 65°C ou 20 minutes à 57°C).

Selon un aspect particulier de l'invention, un tel procédé de fabrication comprend également des étapes de :
- remplissage dudit réceptacle par au moins une partie d'un oeuf ;
- fermeture dudit réceptacle à l'aide d'un opercule ;
- refroidissement du contenu dudit réceptacle.

Selon au moins un mode de réalisation particulier, ladite étape de remplissage comprend les étapes suivantes ;
- cassage de la coquille d'un oeuf;
- dépose d'au moins une partie du contenu dudit oeuf dans le réceptacle.

Ces deux étapes sont de préférence exécutées en veillant à ne pas souiller par de l'oeuf la zone de soudure et ne pas introduire des fragments de coquille dans le réceptacle.

Selon au moins un mode de réalisation particulier, ladite étape de remplissage comprend une étape d'ajout de blanc d'oeuf liquide et/ou d'eau dans ledit réceptacle, de façon à atteindre un poids prédéterminé.

Ceci permet d'obtenir un poids homogène pour chacun des produits, et donc un traitement homogène de ces produits.

Selon au moins un mode de réalisation particulier, ladite étape de fermeture dudit réceptacle se fait avec une mise sous vide partielle.

Cette mise sous vide permet notamment de mieux cuire la partie supérieure du produit. Cette approche constitue une alternative au mode de réalisation de l'invention décrit ci-dessus, selon lequel on maintient volontairement un espace de tête de hauteur non nulle entre la surface supérieure du contenu du réceptacle et l'opercule l'obturant.

Plus généralement, ladite étape de cuisson et de pasteurisation est réalisée, par exemple à l'aide d'un autoclave, avec une mise sous vide partielle, et de préférence en mettant en oeuvre une contre-pression.

Ladite étape de pré-refroidissement peut être assurée à l'intérieur dudit autoclave.

Selon au moins un mode de réalisation particulier, ladite étape de refroidissement met en oeuvre un refroidissement à une température inférieure à 4° C, sans congélation de surface.

L'invention concerne également un produit imitant un oeuf à la coque obtenu par le procédé de fabrication décrit ci-avant, dans l'un ou l'autre de ses modes de réalisation.

### 5. Liste des figures

D'autres caractéristiques et avantages de l'invention apparaîtront plus clairement à la lecture de la description suivante d'un mode de réalisation particulier de l'invention, et des figures annexées parmi lesquelles :
- la figure 1 est une vue schématique d'un produit selon l'invention ;
- les figures 2A et 2B sont des vues en perspective d'un exemple de récipient en forme de coquetier, pouvant être mis en oeuvre selon l'invention ;

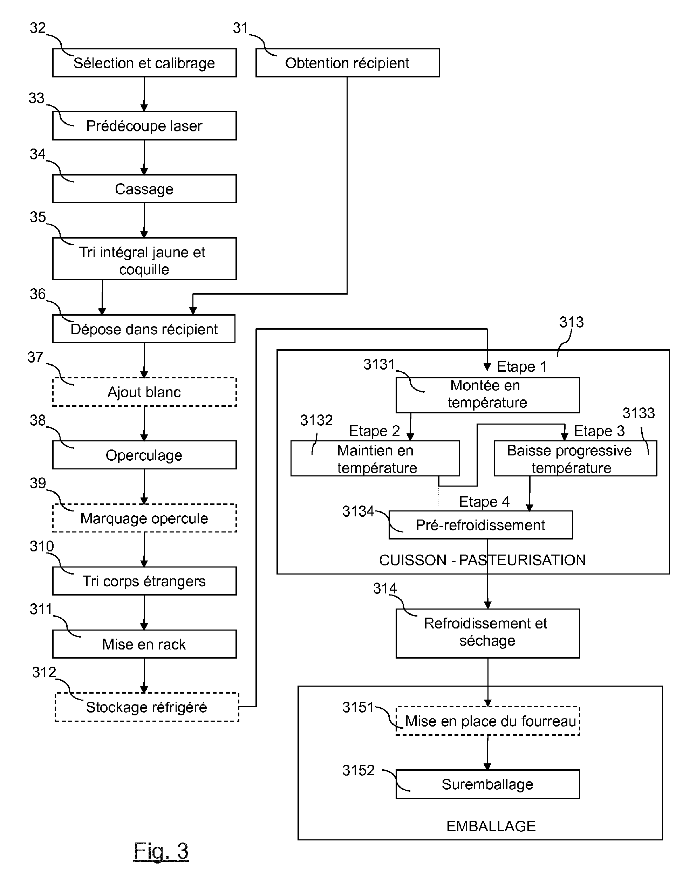

- la figure 3 un organigramme simplifié, présentant les étapes principales de fabrication du coquetier de la figure 1 ;
- la figure 4 illustre une variante d'un récipient adapté à l'invention.

### 6. Description d'un mode de réalisation particulier de l'invention

### 6.1. Le récipient

L'invention propose donc un produit tout à fait nouveau, présentant un récipient contenant au moins une partie d'un oeuf, cuite et pasteurisée dans l'emballage. Dans un mode de réalisation particulier, le récipient est similaire à un coquetier, et permet d'obtenir un produit analogue à un oeuf à la coque traditionnel, mais ne présentant pas les inconvénients de ce dernier. En effet, selon l'invention on propose un oeuf sans coquille, cuit et pasteurisé dans un emballage, présentant les mêmes caractéristiques qu'un oeuf à la coque (ou, dans certains modes de réalisation, des caractéristiques proches) à savoir un blanc gélifié et un jaune liquide, pouvant être réchauffé très rapidement dans un four à micro-ondes.

L'oeuf et en particulier le jaune d'oeuf est pasteurisé et garantit notamment l'absence de salmonelles. Cet oeuf se conserve au moins 30 jours entre 0 et 4°C grâce à la cuisson/pasteurisation du produit.

L'absence de coquille et de résidus de coquille, ainsi que le coquetier operculé, facilitent grandement le transport, la conservation et la consommation du produit, par rapport à l'oeuf à la coque traditionnel. On dispose ainsi d'un nouveau produit de consommation courante, bien adapté notamment à une utilisation sur le lieu de travail, aux enfants ou encore aux personnes fragiles, par exemple dans les hôpitaux ou les maisons de retraite.

De plus, ce produit nouveau peut être fourni dans un récipient de forme adaptée, esthétique et/ou ludique. Il est le cas échéant placé dans un emballage secondaire, par exemple un fourreau cartonné, portant également une cuillère, par exemple en matière plastique, dont la forme est étudiée pour coopérer avec le récipient et faciliter la consommation.

Selon d'autres approches, plusieurs coquetiers peuvent être regroupés dans un même emballage. Par ailleurs, d'autres aliments peuvent être prévus, pour compléter le repas (mouillettes, charcuterie,...).

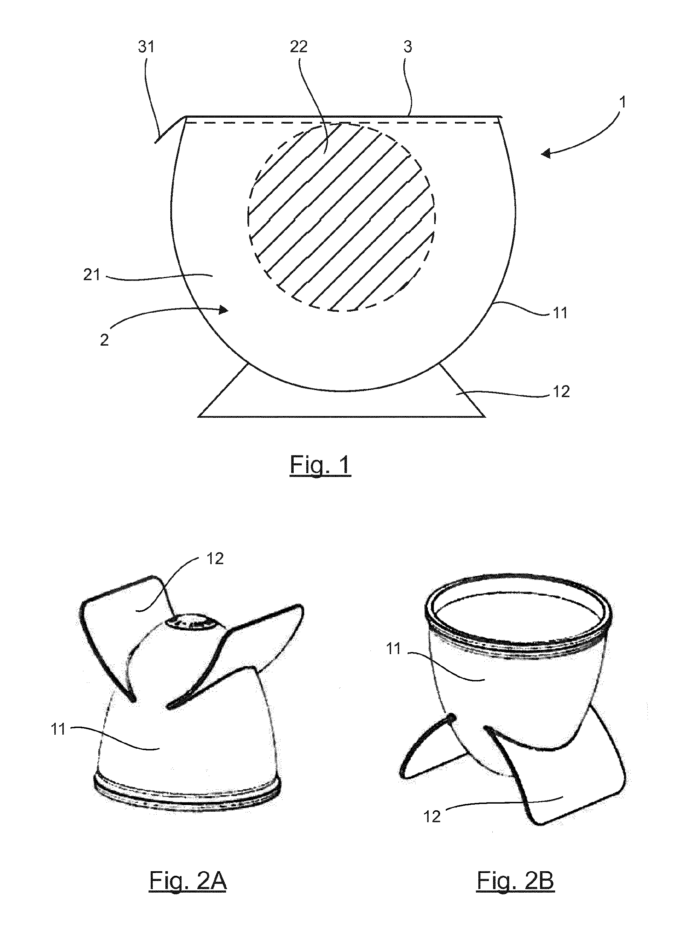

La figure 1 illustre schématiquement un mode de réalisation d'un tel coquetier.

Il présente un récipient 1, comprenant un réceptacle, ou une coupelle, 11, et le cas échéant des moyens de support, permettant d'assurer la stabilité de l'ensemble, par exemple sous la forme de pieds 12. Ces pieds sont par exemple intégrés à la coupelle 11 ou à clipser, en cours de processus ou par le consommateur lui-même.

L'oeuf 2 est placé à l'intérieur de la coupelle 11, le blanc d'oeuf 21 se trouvant à la périphérie, et le jaune d'oeuf 22 au centre, en partie supérieure, sensiblement comme dans un oeuf à la coque classique.

On peut noter que le jaune se met spontanément sous forme de boule, et le jaune d'oeuf est naturellement entouré de blanc épais qui assure naturellement l'éloignement de la boule de jaune de la paroi plastique et de la surface. La boule de jaune est ainsi située, naturellement, juste sous la surface.

La boule de jaune peut notamment être directement visible à l'ouverture de l'opercule, sans être masquée par une couche de blanc totalement ou partiellement coagulée, rappelant ainsi parfaitement l'oeuf à la coque « traditionnel », dont on a ôté le haut de la coquille. Cette caractéristique est notamment obtenue en maintenant, à la cuisson, un espace de tête de hauteur non nulle entre la surface de l'oeuf et l'opercule, qui entraîne une cuisson imparfaite de la couche supérieure du blanc d'oeuf, laissant apparaître directement (par transparence du gel de blanc translucide) ou indirectement (par décollement du gel de blanc d'oeuf peu cuit) le jaune d'oeuf.

Le récipient 1 utilisé est choisi, dans ce mode de réalisation, suffisamment large pour pouvoir contenir cette sphère de 15/20 g de jaune sans que cette dernière ne touche les parois.

La coupelle 11 est fermée par un opercule 3, assurant l'étanchéité, constitué par exemple d'un film plastique solidarisé aux parois de la coupelle par exemple par ultrasons ou par thermo-soudage. Une languette 31 peut être prévue, pour faciliter le retrait de l'opercule 3, avant consommation de l'oeuf.

Selon un mode de réalisation particulier, une mise sous vide partielle, permettant de réduire l'espace de tête et ainsi de cuire plus facilement la zone supérieure du produit peut être mise en oeuvre.

Selon un mode de réalisation alternatif, une fine lame d'air est volontairement maintenue entre la surface supérieure de l'oeuf et l'opercule, de façon à maintenir un espace de tête de 0 à 10 mm de hauteur environ. Ceci entraîne une cuisson imparfaite de la zone supérieure du produit, qui permet, après transport et manipulation du produit, de voir le jaune d'oeuf apparaître dès l'ouverture de l'opercule, sans que ce dernier ne soit masqué par un gel opaque de blanc d'oeuf.

Les designers pourront bien sûr imaginer différentes formes pour le récipient 1, et notamment pour la coupelle 11 et les moyens de support 12. A titre d'exemple, les figures 2A et 2B présentent un exemple d'un tel récipient, pouvant par exemple être réalisé en polypropylène (et plus généralement en tout autre matériau adapté à la cuisson, à la conservation de l'oeuf et au réchauffage aux micro-ondes). A titre indicatif, on peut noter que le diamètre principal de la coupelle 11 est ici de l'ordre de 50 à 65 mm, de même que la hauteur globale du récipient 1. Selon un mode de réalisation préférentiel, le récipient présente un diamètre intérieur entre 45 et60 mm, permettant une juste cuisson du produit et l'introduction aisée d'une cuillère ou de mouillettes par exemple dans le récipient. Le produit peut ainsi se consommer à la petite cuillère, sans zone de rétention/accrochage, grâce à sa forme arrondie (sphérique ou ovoïde).

Le récipient des figures 2A et 2B présente une coupelle relativement proche des coquetiers classiques, destinée à épouser sensiblement la forme de la partie inférieure d'un oeuf. Dans le cas de la figure 1, en revanche, la forme est sensiblement différente, et plus précisément hémisphérique (ou en portion de sphère le cas échéant). Cette approche est intéressante, car elle permet de garantir une distribution la plus homogène possible du blanc d'oeuf 21, et un bon centrage du jaune d'oeuf 22. Ainsi, il est possible d'obtenir une cuisson homogène, du blanc et du jaune, et de garantir que ce dernier sera pasteurisé à coeur, sans qu'il ne durcisse.

Un autre exemple de récipient adapté est illustré en figure 4.

On peut également prévoir des formes plus ludiques que celles citées ci-dessus, et notamment des formes qui permettent une bonne distribution de la température comme des volumes à facettes (ex : parallélépipédiques, cubiques,...).

Une telle géométrie peut ne pas permettre de pouvoir manger le produit à la cuillère en tout point, mais ces variantes peuvent être adaptées à des cas où l'on veut démouler le produit. Dans ce cas, il pourra être nécessaire d'ajouter un agent de démoulage autorisé.

D'une façon générale, il peut être utile que la forme de la coupelle soit adaptée pour que la boule de jaune 22 soit suffisamment éloignée des parois de la coupelle 11.

La coupelle peut notamment être transparente, pour permettre de voir l'oeuf, ainsi qu'un contrôle de l'absence de coquille ou d'autres corps étrangers. Bien sûr, des récipients opaques ou semi-transparents sont également envisageables. Dans ce cas, des technologies de tri non intrusif comme les rayons X pourront être mises en oeuvre pour garantir l'absence de résidus de coquilles.

### 6.2. Exemple de procédé de fabrication

Pour obtenir un oeuf précuit sans coquille, analogue à un oeuf à la coque, pouvant être réchauffé dans un four à micro-ondes dans son emballage, cet oeuf présentant un blanc gélifié et un jaune liquide et pasteurisé, permettant une conservation par exemple de l'ordre de 30 jours entre 0 et 4°C, la fabrication présente un certain nombre de contraintes, telles que :
- sur le plan de la présentation de l'aliment, le blanc doit être gélifié, et entourer une boule de jaune liquide. Cette boule de jaune doit être autant que possible centrée et en tout état de cause éloignée des parois du réceptacle. A titre alternatif, ce blanc gélifié n'entoure pas totalement la boule de jaune liquide, et notamment, n'en recouvre pas la partie supérieure, de sorte que la boule de jaune est visible dès l'ouverture de l'opercule ;
- il ne doit bien sûr y avoir aucun résidu dans le réceptacle, et en particulier aucune coquille d'oeuf, ni souillure pouvant nuire à la présentation, mais également à l'efficacité du scellage par l'opercule ;
- les cuissons respectives du blanc et du jaune doivent être parfaites. En particulier, le jaune doit être pasteurisé à coeur, sans être trop cuit. A titre alternatif, on peut accepter une cuisson imparfaite de la partie supérieure du blanc de l'oeuf, dans le but de rendre le jaune de l'oeufvisible à l'ouverture du réceptacle ;
- l'ensemble doit être compatible avec un réchauffage au four à micro-ondes.

La figure 2 illustre schématiquement, sous la forme d'une succession d'étapes, un exemple de procédé permettant d'obtenir un oeuf précuit sans coquille tel que décrit ci-dessus.

Le procédé suppose tout d'abord, la fabrication, ou l'obtention, 31 d'un récipient adapté, tel que par exemple celui illustré par les figures 1, 2A et 2B. Le cas échéant, ces récipients sont préparés et nettoyés, de façon qu'ils soient prêts à recevoir le contenu d'un oeuf cru.

On sélectionne (32) des oeufs calibrés de façon que tous les produits subissent un traitement homogène. Dans un mode de réalisation de l'invention, on utilise ainsi des oeufs calibrés à 62 ± 1 gramme. Ces oeufs ont, de préférence, préalablement été stockés au froid. Ainsi, selon un mode de réalisation, on privilégiera des oeufs fraîchement pondus de façon à ce que l'oeuf contienne suffisamment de blanc épais pour permettre un bon maintien de la boule de jaune.

II convient ensuite de casser la coquille, d'une façon adaptée, évitant ou à tout le moins limitant autant que faire se peut, la présence de coquilles ou de micro-coquilles. Selon une approche particulière, on peut ainsi mettre en oeuvre une prédécoupe laser 33, qui fragilise la coquille, par exemple sous la forme de pointillés, au niveau de son équateur (zone de l'oeuf présentant le plus grand diamètre lorsque l'oeuf est considéré en position verticale), sans la traverser.

Ensuite, le cassage 34 proprement dit est facilité, et ne produit pas de micro-coquilles. On procède au cassage à proprement parler en appliquant une pression sur la pré-découpe, tout en retenant les deux parties de la coquille, par exemple par une ou plusieurs ventouses.

Cette approche, connue en soi, nécessite cependant des précautions supplémentaires, pour garantir l'intégrité du jaune et cette absence de coquilles et micro-coquilles.

Selon un autre mode de réalisation, on peut mettre l'oeuf en rotation face à une meuleuse afin d'obtenir une découpe nette.

A ce niveau, un premier tri 35 peut être effectué, pour vérifier l'intégrité du jaune, et l'absence de coquilles. Le contenu de l'oeuf peut être versé directement dans le récipient 1 ou alors dans une coupelle plane où l'on cherche à étaler le blanc pour mieux visualiser l'intégrité du jaune et les résidus de coquille.

Ensuite, l'oeuf est déposé (36) dans le récipient, en faisant attention à ne pas détériorer la boule de jaune ni faire apparaître de souillures sur les bords du récipient, et en particulier sur la zone de solidarisation de l'opercule.

De façon optionnelle, une étape 37 d'ajout de blanc liquide et/ou d'eau peut être prévue pour homogénéiser les produits. Notamment, ceci permet d'ajuster le poids du produit et/ou de régler la hauteur de l'espace de tête. Ceci est d'autant plus utile que le poids de coquille et/ou la quantité de blanc adhérant à la coquille peuvent varier.

Ainsi, on peut prévoir que, si le poids de l'oeuf calibré était de l'ordre de 62 grammes, le poids net cible doit être de 53 grammes. Si cela n'est pas le cas, on ajuste le poids de façon à atteindre ce poids cible.

Selon d'autres modes de réalisation, le remplissage peut être effectué différemment, par exemple par insertion de blanc liquide puis ajout de la boule de jaune d'oeuf. Ceci peut par exemple permettre de changer la proportion naturelle de jaune et de blanc (à savoir 1/3 de jaune et 2/3 de blanc). Dans ce cas, lors de l'égouttage de la boule de jaune, on pourra veiller à garder une petite portion de blanc épais pour un soutien suffisant de la boule de jaune ensuite.

Ensuite, le récipient va être operculé (38). Selon un mode de réalisation, on met en oeuvre un operculage avec un vide partiel. Selon un autre mode de réalisation, lors de l'operculage, on maintient volontairement un espace de tête non nul, avec de l'air ambiant ou une atmosphère modifiée, entre la surface supérieure de l'oeuf et l'opercule, préférentiellement de l'ordre de 1 à 10 mm de hauteur. L'opercule est réalisé dans un film par exemple en matière plastique. Il peut être transparent ou opaque et le cas échéant pré-imprimé. Il est solidarisé aux bords du récipient par exemple par soudage ultrasons, et conçu de façon à être pelable.

Optionnellement, un marquage peut être rapporté sur l'opercule, après sa solidarisation au récipient, notamment pour indiquer la date de fabrication du coquetier et/ou son origine, ou encore le numéro de lot, les conditions de réchauffage et de conservation du produit,...

Une fois le récipient scellé, un tri 310 supplémentaire est avantageusement effectué pour identifier la présence éventuelle de corps étrangers. Ce tri peut par exemple être réalisé à l'aide de rayons X, en particulier pour détecter la présence de coquilles.

Ensuite, les récipients operculés sont installés dans un rack (311) en vue de leur cuisson.Le rack contenant les produits est adapté de façon que ceux-ci ne bougent pas pendant le traitement thermique. Il est en effet nécessaire, dans ce mode de réalisation, que les récipients conservent leur position verticale, de façon à obtenir une surface de blanc d'oeuf plane.

Optionnellement, si un temps d'attente important est prévu, ce rack est stocké de façon réfrigérée (312).

Les produits, ou coquetiers, vont alors subir une étape de cuisson et de pasteurisation 313. Cette opération peut être effectuée de différentes manières, mais doit être maîtrisée de façon très précise, pour garantir la qualité du produit (blanc gélifié, jaune liquide et pasteurisé). Le traitement du jaune, en particulier, est relativement complexe, car celui-ci est éloigné du bord du récipient, et doit être pasteurisé pour éviter la présence de salmonelles notamment, sans qu'il ne durcisse. On note également une augmentation de viscosité du jaune au delà de 65°C, et il est nécessaire de cuire le blanc d'oeuf à au moins 85°C pour obtenir une texture ferme.

Pour ceci, la cuisson peut être mise en oeuvre selon une courbe de température variant dans le temps, par exemple selon au moins trois étapes :
- une montée en température 3131 rapide, amenant l'ambiance de cuisson des produits à une température entre 90° et 115° C, et de préférence entre 95 et 105°C, sans palier de température préalable ;
- un palier à température fixe 3132, par exemple à une température entre 90 à 115°C, en moins de dix minutes. A la fin de ce palier, le blanc est alors coagulé;
- une baisse progressive 3133 (une série de paliers successifs ou une pente continue), relativement lente, de la température, jusqu'à une température d'ambiance de 70 à 50°C, préférentiellement en une durée de l'ordre de 10 à 40 minutes;
- un pré-refroidissement 3134 très rapide, de façon à ramener la température du coeur du jaune à moins de 60° C, préférentiellement moins de 15° C, le plus rapidement possible.

On notera que ces températures permettent d'obtenir une température d'au moins 85° C pour le blanc, et une température d'au moins 57°C pendant 20 minutes ou 63°C pendant 2 minutes et 15 secondes par exemple, selon la conduite du palier variable pour le coeur du jaune. La température à coeur, et donc la pasteurisation, s'obtient ici pendant le pré-refroidissement 3134, et de préférence pendant le palier variable et/ou au début du pré-refroidissement.

Bien sûr, les températures et les durées peuvent être adaptées, notamment en fonction de la pression appliquée. Notamment, une cuisson à haute pression peut être envisagée.

Selon une variante, il est possible d'effectuer le chauffage en au moins deux étapes successives, une étape de chauffage du blanc, assurant sa coagulation, puis une seconde étape de pasteurisation du jaune d'oeuf, à une température moins élevée, assurant la pasteurisation du jaune d'oeuf, sans le coaguler, ni même l'épaissir.

Dans ce mode de réalisation, la cuisson et la pasteurisation 313 sont réalisées à l'aide d'un autoclave. Une contre-pression peut alors être mise en oeuvre à l'intérieur de l'autoclave, pour éviter la déformation de l'opercule. Cette contre-pression peut notamment être comprise entre 0,2 et 1,5 bars.

Ensuite, les produits sont refroidis (314) à une température inférieure à 4°C, sans congélation de surface, et séchés.

Enfin, l'emballage peut être complété, par exemple par la mise en place d'un fourreau cartonné 3151, puis un suremballage 3152, pour regrouper les produits finalisés, en vue de leur stockage et de leur expédition.

C'est durant cette étape d'emballage 315 que l'on peut également ajouter une cuillère en matière plastique, et le cas échéant d'autres éléments consommables (mouillettes ou gressins par exemple), préparés indépendamment.

On peut également prévoir des sachets d'assaisonnement, contenant par exemple du sel ou du poivre. Selon un autre mode de réalisation, il est possible d'introduire directement, avant cuisson (par exemple avant ou après l'étape 37), une quantité prédéterminée d'assaisonnement, ou de tout autre produit sélectionné.

L'emballage peut comprendre un ou plusieurs coquetiers, selon la destination. On peut par exemple prévoir des emballages d'un unique oeuf, pour une consommation sur le lieu de travail, de 4 ou 6 oeufs, pour une utilisation familiale, et pour de plus grandes quantités, pour des utilisations collectives, par exemple dans un hôpital.

Le mode de fabrication décrit ci-dessus est bien sûr donné à titre d'exemple, et d'autres approches peuvent être envisagées, pour la plupart des étapes, pour obtenir un produit tel que décrit plus haut.

Notamment, d'autres récipients qu'un coquetier peuvent être envisagés. Par ailleurs, en adaptant le procédé, on peut définir une gamme de textures du jaune, allant du liquide au pâteux (à l'instar des viandes, de « bleu » à « bien cuit »). D'autres variantes peuvent être envisagées, avec seulement du jaune, seulement du blanc, des répartitions diverses de jaune et de blanc, des oeufs cocotte avec de la crème...

Dans le cas où un espace de tête de hauteur non nulle a été maintenue dans le réceptacle lors de la cuisson, la couche supérieure de blanc est imparfaitement cuite, laissant apparaître directement (par transparence du gel de blanc translucide) ou indirectement (par décollement du gel de blanc d'oeuf peu cuit) le jaune d'oeuf. De cette façon, lorsque l'utilisateur final ouvre l'opercule obturant le réceptacle, la boule de jaune est directement visible, comme dans un oeuf à la coque obtenu selon une cuisson domestique classique, auquel on a retiré le haut de sa coquille.

## Revendications

1. Procédé de fabrication d'un produit imitant un oeuf à la coque, comprenant un réceptacle rigide fermé par un opercule et contenant au moins une partie d'un oeuf, pasteurisé et cuit dans ledit réceptacle, et sans coquille, **caractérisé en ce qu'il** comprend une étape de cuisson et pasteurisation du contenu dudit réceptacle comprenant les étapes suivantes :
- montée en température, pour atteindre une température comprise entre 90et 115 °C, en moins de 10 minutes ;
- maintien à une température comprise entre 90 et 115° C pendant une durée inférieure ou égale à 10 minutes.

2. Procédé de fabrication selon la revendication 1, **caractérisé en ce que** lors de ladite étape de cuisson et pasteurisation du contenu dudit réceptacle, on maintient un espace de tête de hauteur non nulle et inférieure ou égale à environ 10 mm entre une surface supérieure dudit contenu et ledit opercule.

3. Procédé de fabrication selon l'une quelconque des revendications 1 et 2, **caractérisé en ce que** ladite étape de cuisson et pasteurisation du contenu dudit réceptacle comprend également des étapes de :
- baisse progressive de la température jusqu'à une température de 90 à 50° C;
- pré-refroidissement rapide, de façon à amener la température du jaune d'oeuf en tout point de l'oeuf à moins de 15° C.

4. Procédé de fabrication selon l'une quelconque des revendications 1 à 3, **caractérisé en ce qu'il** comprend également des étapes de :
- remplissage dudit réceptacle par au moins une partie d'un oeuf ;
- fermeture dudit réceptacle à l'aide d'un opercule
- refroidissement du contenu dudit réceptacle.

5. Procédé selon la revendication 4, **caractérisé en ce que** ladite étape de remplissage comprend les étapes suivantes :
- cassage de la coquille d'un oeuf;
- dépose d'au moins une partie du contenu dudit oeuf dans ledit réceptacle.

6. Procédé selon l'une quelconque des revendications 4 et 5, **caractérisé en ce que** ladite étape de remplissage comprend une étape d'ajout de blanc d'oeuf liquide dans ledit réceptacle, de façon à atteindre un poids prédéterminé.

7. Procédé selon l'une quelconque des revendications 4 à 6, **caractérisé en ce que** ladite étape de fermeture dudit réceptacle se fait avec une mise sous vide partielle.

8. Procédé selon la revendication 3, **caractérisé en ce que** ladite étape de pré-refroidissement est assurée à l'intérieur d'un autoclave.

9. Procédé selon l'une quelconque des revendications 4 à 7, **caractérisé en ce que** ladite étape de refroidissement met en oeuvre un refroidissement à une température inférieure à 4° C, sans congélation de surface.

10. Produit imitant un oeuf à la coque obtenu selon le procédé de fabrication de l'une quelconque des revendications 1 à 9.

11. Produit imitant un oeuf à la coque selon la revendication 10, **caractérisé en ce que**, à l'ouverture dudit opercule, le jaune de l'oeuf est visible.
